# EUROPÄISCHE PATENTSCHRIFT

(11) **EP 1 901 675 B1**
(45) Veröffentlichungstag und Bekanntmachung des Hinweises auf die Patenterteilung: **11.01.2012**
(21) Anmeldenummer: 07723457.3
(22) Anmeldetag: 21.03.2007
(51) Int. Cl.: A61C 13/00, F27B 17/02, A61C 1/00

(54) **PRESSOFEN FÜR ZAHNERSATZ ODER ZAHNTEILERSATZ**
DENTAL FURNACE FOR DENTURES OR DENTURE ELEMENTS
FOUR DE CUISSON DENTAIRE POUR PROTHÈSES DENTAIRES OU PARTIES DE PROTHÈSES DENTAIRES

(30) Priorität: 22.03.2006 DE 202006004578 U
(43) Veröffentlichungstag der Anmeldung: 26.03.2008
(73) Patentinhaber: Dekema Dental-Keramiköfen GmbH, 83395 Freilassing (DE)
(72) Erfinder: MILLER, Stephan, 83278 Traunstein (DE)
(74) Vertreter: Manitz, Finsterwald & Partner GbR
(86) Internationale Anmeldenummer: PCT/EP2007/002500
(87) Internationale Veröffentlichungsnummer: WO 2007/107350

(56) Entgegenhaltungen:
- EP-A- 0 231 773
- EP-A1- 0 438 802
- DE-A1- 10 324 404
- DE-B3- 10 327 892
- DE-C1- 10 208 801

## Beschreibung

Die vorliegende Erfindung betrifft einen Pressofen für Zahnersatz oder Zahnteilersatz mit einer beheizbaren und evakuierbaren Brennkammer, in welcher eine Pressform, insbesondere Muffel, mit einem Presskanal zum Einführen eines Pressstempels positionierbar ist.

Bei derartigen Pressöfen wird das Ausgangsmaterial für den Zahnersatz oder Zahnteilersatz zumeist in Form von Pellets in einer sogenannten Muffel erwärmt und in Form gepresst. Die Muffel weist hierfür einen zuvor mit Hilfe einer Abdruckform hergestellten Hohlraum auf, welcher der Form des herzustellenden Zahnersatzes oder Zahnteilersatzes entspricht. Über einen Stempel wird die Zahnersatzmasse in den Hohlraum gepresst und dort unter Druck gehalten, bis sie erstarrt ist.

Ein Pressofen gemäß dem Oberbegriff von Anspruch 1 ist aus der DE 102 08 801 C1 bekannt.

Der Erfindung liegt die Aufgabe zugrunde, einen einfach herzustellenden und zu handhabenden derartigen Pressofen anzugeben, mit dem gute Pressergebnisse erzielt werden können.

Diese Aufgabe wird durch einen Pressofen für Zahnersatz oder Zahnteilersatz mit einer beheizbaren und evakuierbaren Brennkammer, in welcher eine Pressform, insbesondere Muffel, mit einem Presskanal zum Einführen eines Pressstempels positionierbar ist, einem Differenzdruckantrieb zum Antreiben des Pressstempels mit einem ersten Druckraum, welcher an die Brennkammer angeschlossen und über diese evakuierbar und belüftbar ist, und einem zweiten Druckraum, welcher gemeinsam mit dem ersten Druckraum evakuierbar, aber separat belüftbar ist, und einem dazwischen vorhandenen beweglichen Element, welches sich in Abhängigkeit von der Druckdifferenz zwischen den beiden Druckräumen bewegt und mit dem Pressstempel in Antriebsverbindung steht, wobei die Belüftung des zweiten Kolbenraums in Abhängigkeit einer gewünschten Presskraft des Pressstempels auf den Zahnersatz regelbar ist, gelöst.

Durch die Verwendung eines Differenzdruckantriebs für den Pressstempel, dessen erster Druckraum an die Brennkammer angeschlossen ist und dessen zweiter Druckraum gemeinsam mit dem ersten Druckraum evakuierbar aber separat belüftbar ist, kann in besonders geschickter Weise die erforderliche Presskraft aufgebracht werden. Durch die Regelbarkeit der Belüftung des zweiten Druckraums in Abhängigkeit der gewünschten Presskraft kann diese sehr genau eingestellt werden. Aufgrund der dadurch möglichen Presskurven können sehr gute Press- und Brennergebnisse für den Zahnersatz oder -teilersatz erreicht werden.

Nach einer bevorzugten Ausgestaltung der Erfindung ist der Differenzdruckantrieb als Kolbenantrieb mit einem doppelseitig beaufschlagbaren Kolben ausgebildet. Der erste Kolbenraum ist dabei an die Brennkammer angeschlossen und über diese evakuierbar und belüftbar, während der zweite Kolbenraum gemeinsam mit dem ersten Kolbenraum evakuierbar aber separat belüftbar ist. Ein solcher Kolbenantrieb ist relativ kostengünstig herstellbar und funktionssicher.

Zur Positionierung der Muffel im Brennraum ist bevorzugt ein Träger vorgesehen, der über eine Öffnung in die Brennkammer ein- und aus dieser ausfahrbar ist. Damit ist eine einfache Beschickung der Brennkammer verwirklicht.

Der Träger weist insbesondere eine Platte auf, durch welche die Brennkammer bei eingefahrenem Träger gasdicht verschlossen ist. Dadurch wird beim Einfahren der Muffel über den Träger automatisch die Brennkammer verschlossen und kann evakuiert werden.

Vorteilhaft ist die Anordnung der Öffnung auf der Unterseite der Brennkammer, wobei der Träger über einen Lift in die Brennkammer ein- und aus dieser ausfahrbar ist. Dadurch ergibt sich ein platzsparender Aufbau und eine gute Zugänglichkeit des Trägers zur Positionierung der Muffel.

In geschickter Weise ist bei dieser Ausgestaltung der Pressstempel samt Differenzdruckantrieb oberhalb des Trägers, dem Lift axial gegenüberliegend, angeordnet. Dadurch ergibt sich insbesondere eine sehr einfache Anordnung und hohe Betriebssicherheit.

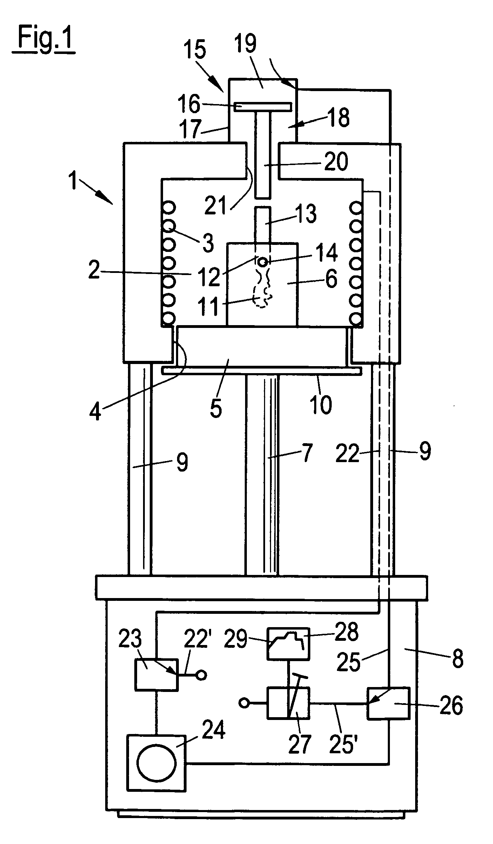

Ein Ausführungsbeispiel der Erfindung ist nachfolgend dargestellt und wird nachfolgend beschrieben. Es zeigt als einzige Figur
- Fig. 1: eine teilweise geschnittene Seitenansicht eines erfindungsgemäßen Pressofens.

Der dargestellte Pressofen umfasst ein Brennofengehäuse 1 mit einer darin vorhandenen Brennkammer 2 und einer in der Brennkammer 2 vorhandenen Heizspirale 3. An ihrer Unterseite weist die Brennkammer 2 eine Öffnung 4 auf, durch welche ein Träger 5 für eine Muffel 6 in die Brennkammer 2 ein- und aus dieser ausfahrbar ist. Zum Ein- und Ausfahren des Trägers 5 ist ein Lift 7 vorgesehen, der an der Unterseite des Trägers 5 angreift.

Der Lift 7 ist durch einen hier nicht dargestellten, in einem unterhalb des Brennofengehäuses 1 angeordneten Sockelgehäuse 8 vorhandenen Antrieb betätigbar. Über Säulen 9 trägt das Sockelgehäuse 8 das Brennofengehäuse 1. An der Unterseite des Trägers 5 ist eine Platte 10 angeordnet, über welche die Brennkammer 2 bei eingefahrenem Träger 5 gasdicht verschließbar ist.

Die Muffel 6 weist einen Hohlraum 11 auf, dessen Form einem gewünschten Zahnersatz oder Zahnteilersatz entspricht und zuvor mit Hilfe eines Modells in bekannter Weise hergestellt wurde. Der Hohlraum 11 ist an einen Kanal 12 angeschlossen, der auf der Oberseite der Muffel 6 mündet. Der Kanal 12 dient als Führung für einen Pressstempel 13 und zur Aufnahme eines Pellets 14 aus Zahnersatzmaterial. Oberhalb der Muffel 6 und der Brennkammeröffnung 4 gegenüberliegend ist ein Kolbenantrieb 15 vorgesehen. Dieser umfasst einen doppelseitig beaufschlagbaren Kolben 16, der in einem Zylinder 17 angeordnet ist und darin einen ersten Kolbenraum 18 und einen von diesen getrennten Kolbenraum 19 bildet. Der Kolben 16 ist mit einer Kolbenstange 20 versehen, die mit dem Pressstempel 13 axial ausgerichtet ist und bei Verschieben des Kolbens 16 an diesem angreift. Hierfür greift die Kolbenstange 20 durch eine im Brennkammergehäuse 1 vorgesehene Öffnung 21, die ebenfalls der Brennkammeröffnung 4 gegenüberliegend vorgesehen ist.

Der erste Kolbenraum 18 ist über die Öffnung 21 an die Brennkammer 2 angeschlossen und mit dieser evakuierbar und belüftbar. Hierfür ist an die Brennkammer 2 eine Absaug- und Belüftungsleitung 22 angeschlossen, die über ein Umschaltventil 23 wahlweise mit einer Pumpe 24 oder über eine Leitung 22' mit Atmosphäre verbindbar ist. Der zweite Kolbenraum 19 ist über eine weitere Absaugleitung 25 und ein weiteres Umschaltventil 26 ebenfalls an die Pumpe 24 angeschlossen. Über eine Leitung 25' ist der zweite Ausgang des Umschaltventils 26 an Atmosphäre angeschlossen. In der Leitung 25' ist ein Regelventil 27 eingeschaltet, welches über eine Steuerung 28 einstellbar ist. Wie durch die Kurve 29 in der Steuerung 28 angedeutet, erfolgt die Regelung der Belüftung des zweiten Kolbenraums 19 über die Leitung 25' in Abhängigkeit von einer gewünschten Presskurve, also Presskraft des Pressstempels 13.

Zur Herstellung eines Zahnersatzes oder Zahnteilersatzes mit dem dargestellten Pressofen wird eine zuvor hergestellte Muffel 6 mit Formraum 11, Presskanal 12 und einem darin angeordneten Pellet 14 aus Zahnersatzmaterial auf dem aus der Brennkammer 2 ausgefahrenen Träger 5 des Pressofens positioniert. In den Presskanal 12 der Muffel 6 wird ein Pressstempel 13 eingesetzt. Danach wird der Träger 5 mit der Muffel 6 über den Lift 7 in die Brennkammer 2 eingefahren, wobei diese durch den Teller 10 gasdicht abgedichtet wird.

Nun kann die Brennkammer 2 über die Pumpe 24 evakuiert werden, wobei über die Öffnung 21 zugleich der erste Kolbenraum 18 evakuiert wird. Gleichzeitig wird der zweite Kolbenraum 19 mittels der Pumpe 24 evakuiert. Da sich demnach beidseits des Kolbens 16 in den Kolbenräumen 18 und 19 derselbe Unterdruck einstellt, bewegt sich der Kolben 16 nicht. Zur Ausübung eines gewünschten Pressdrucks auf den Pressstempel 13 wird nun, nachdem sich in der Brennkammer 2 der gewünschte Unterdruck eingestellt hat, der zweite Kolbenraum 19 über die Leitung 25' teilbelüftet. Das heißt, der Unterdruck im zweiten Kolbenraum 19 wird so weit verringert, dass der sich daraus ergebende Differenzdruck zwischen den beiden Kolbenräumen 18 und 19 eine gewünschte Presskraft ergibt, die vom Kolben 16 über die Kolbenstange 20 auf den Pressstempel 13 und damit auf das Zahnersatzmaterial 14 in der Muffel 6 übertragen wird.

Über die Steuerung 28 kann ein gewünschter Presskraftverlauf über die Zeit realisiert werden.

Nach beendetem Pressen kann der zweite Kolbenraum 19 wieder evakuiert werden. Anschließend werden beide Kolbenräume 18 und 19 sowie die Brennkammer 2 belüftet. Indem der zweite Kolbenraum 19 langsamer belüftet wird, kann dabei ein automatisches Hochfahren des Kolbens 16 samt Kolbenstange 20 erreicht werden.

### Bezugszeichenliste

- 1: Brennkammergehäuse
- 2: Brennkammer
- 3: Heizeinrichtung
- 4: untere Öffnung von 1
- 5: Träger
- 6: Muffel
- 7: Lift
- 8: Sockelgehäuse
- 9: Säule
- 10: Teller
- 11: Formraum
- 12: Führungskanal
- 13: Pressstempel
- 14: Pellet
- 15: Kolbenantrieb
- 16: Kolben
- 17: Zylinder
- 18: erster Kolbenraum
- 19: zweiter Kolbenraum
- 20: Kolbenstange
- 21: obere Öffnung von 1
- 22: Absaug- und Belüftungsleitung
- 22': Belüftungsleitung
- 23: Umschaltventil
- 24: Pumpe
- 25: Absaug- und Belüftungsleitung
- 25': Belüftungsleitung
- 26: Umschaltventil
- 27: Regelventil
- 28: Steuerung

## Patentansprüche

1. Pressofen für Zahnersatz oder Zahnteilersatz mit einer beheizbaren und evakuierbaren Brennkammer (2), in welcher eine Pressform, insbesondere Muffel (6), mit einem Presskanal (12) zum Einführen eines Pressstempels (13) positionierbar ist, einem Differenzdruckantrieb (15) zum Antreiben des Pressstempels (13) mit einem ersten Druckraum (18), welcher an die Brennkammer (2) angeschlossen und über diese evakuierbar und belüftbar ist, und einem zweiten Druckraum (19), welcher gemeinsam mit dem ersten Druckraum (18) evakuierbar, aber separat belüftbar ist, und einem dazwischen vorhandenen beweglichen Element (16), welches sich in Abhängigkeit von der Druckdifferenz zwischen den beiden Druckräumen (18, 19) bewegt und mit dem Pressstempel (13) in Antriebsverbindung steht,
**dadurch gekennzeichnet,**
**dass** die Belüftung des zweiten Kolbenraums (19) in Abhängigkeit einer gewünschten Presskraft des Pressstempels (13) auf den Zahnersatz (14) regelbar ist.

2. Pressofen nach Anspruch 1,
**dadurch gekennzeichnet,**
**dass** der Differenzdruckantrieb als Kolbenantrieb mit einem doppelseitig beaufschlagbaren Kolben (16) zum Antreiben des Pressstempels (13) ausgebildet ist, wobei die beiden Kolbenräume den ersten Druckraum (18) und den zweiten Druckraum (19) bilden.

3. Pressofen nach Anspruch 1 oder 2,
**dadurch gekennzeichnet,**
**dass** ein Träger (5) für die Pressform (6) vorgesehen ist, der über eine Öffnung (4) in die Brennkammer (2) ein- und aus dieser ausfahrbar ist.

4. Pressofen nach Anspruch 3,
**dadurch gekennzeichnet,**
**dass** der Träger (5) eine Platte (10) umfasst, durch welche die Brennkammer (2) bei eingefahrenem Träger (5) gasdicht verschlossen ist.

5. Pressofen nach Anspruch 3 oder 4,
**dadurch gekennzeichnet,**
**dass** die Öffnung (4) auf der Unterseite der Brennkammer (2) vorgesehen ist und dass der Träger (5) über einen Lift (7) in die Brennkammer (2) ein- und aus dieser ausfahrbar ist.

6. Pressofen nach Anspruch 5,
**dadurch gekennzeichnet,**
**dass** der Pressstempel (13), dem Lift (7) axial gegenüberliegend, samt Differenzdruckantrieb (15) oberhalb des Trägers (5) angeordnet ist.

## Claims

1. A pressing furnace for dentures or partial dentures having a heatable and evacuable firing chamber (2) in which a mould, in particular a muffle (6), with a pressing channel (12) for introducing a plunger (13) can be positioned, having a differential pressure drive (15) for driving the plunger (13) with a first pressure space (18) which is connected to the firing chamber (2) and can be evacuated and ventilated via it and with a second pressure space (19) which can be evacuated together with the first pressure space (18), but can be ventilated separately, and having a moving element (16) which is present therebetween and which moves between the two pressure spaces (18, 19) in dependence on the pressure difference and is in drive connection with the plunger (13),
**characterised in that**
the ventilation of the second piston space (19) can be regulated in dependence on a desired pressing force of the plunger (13) onto the dentures (14).

2. A pressing furnace in accordance with claim 1,
**characterised in that**
the differential pressure drive is designed as a piston drive having a piston (16), which can be acted on at two sides, for driving the plunger (13), with the two piston spaces forming the first pressure space (18) and the second pressure space (19).

3. A pressing oven in accordance with claim 1 or claim 2,
**characterised in that**
a carrier (5) for the mould (6) is provided which can be moved into and out of the firing chamber (2) via an opening (4).

4. A pressing furnace in accordance with claim 3,
**characterised in that**
the carrier (5) includes a plate (10) by which the firing chamber (2) is closed in a gas-tight manner when the carrier (5) is moved in.

5. A pressing oven in accordance with claim 3 or claim 4,
**characterised in that**
the opening (4) is provided on the lower side of the firing chamber (2); and **in that** the carrier (5) can be moved into and out of the firing chamber (2) via a lift (7).

6. A pressing furnace in accordance with claim 5,
**characterised in that**
the plunger (13) is arranged above the carrier (5) together with the differential pressure drive (15) disposed axially opposite the lift.

## Revendications

1. Four-presse pour prothèses dentaires ou parties de prothèses dentaires, comprenant une chambre de cuisson susceptible d'être chauffée et évacuée (2), dans laquelle un moule de pressage, en particulier un moufle (6), doté d'un canal de pressage (12) pour l'introduction d'un poinçon de presse (13), d'un entraînement à pression différentielle (15) pour l'entraînement du poinçon de presse (13) présentant une première chambre à pression (18) qui est raccordée à la chambre de cuisson (2) et peut être évacuée et mise à l'air via celle-ci, et une seconde chambre à pression (19) qui peut être évacuée conjointement avec la première chambre à pression (18) mais mise à l'air séparément, et d'un élément mobile (16) prévu entre ces chambres, qui se déplace en fonction de la différence de pression entre les deux chambres à pression (18, 19), et qui se trouve en liaison d'entraînement avec le poinçon de presse (13),
**caractérisé en ce que**
la mise à l'air de la seconde chambre à pression (19) est susceptible d'être régulée en fonction d'une force de pressage désirée du poinçon de pressage (13) sur la prothèse dentaire (14).

2. Four-presse selon la revendication 1,
**caractérisé en ce que**
l'entraînement à pression différentielle est réalisé sous forme d'un entraînement à piston avec un piston (16) susceptible d'être attaqué sur les deux côtés et destiné à entraîner le poinçon de presse (13), de sorte que les deux chambres de piston forment la première chambre à pression (18) et la seconde chambre à pression (19).

3. Four-presse selon la revendication 1 ou 2,
**caractérisé en ce qu'**il est prévu un support (5) pour le moule de pressage (6), qui est susceptible d'être introduit dans la chambre de cuisson (2) et sorti hors de celle-ci via une ouverture (4).

4. Four-presse selon la revendication 3,
**caractérisé en ce que** le support (5) comprend une plaque (10) au moyen de laquelle la chambre de cuisson (2) est refermée de manière étanche aux gaz lorsque le support (5) est introduit.

5. Four-presse selon la revendication 3 ou 4,
**caractérisé en ce que** l'ouverture (4) est prévue à la face inférieure de la chambre de cuisson (2), et **en ce que** le support (5) est susceptible d'être introduit dans la chambre de cuisson (2) et sorti hors de celle-ci au moyen d'un dispositif de levage (7).

6. Four-presse selon la revendication 5,
**caractérisé en ce que** le poinçon de presse (13) est agencé, conjointement avec l'entraînement à pression différentielle (15) axialement à l'opposé du dispositif de levage (7) au-dessus du support (5).
